# EUROPEAN PATENT APPLICATION

(11) **EP 4 786 751 A1**
(43) Date of publication of application: **05.08.2026**
(21) Application number: 26152756.8
(22) Date of filing: 19.01.2026
(51) Int. Cl.: F01D 21/00, F01D 25/02

(54) **EDDY CURRENT FAN BLADE TIP TIMING SENSOR USED FOR FAN BLADE-TIP DEICING**

(30) Priority: 23.01.2025 US 202519035512
(71) Applicant: RTX Corporation, Farmington, CT 06032 (US)
(72) Inventor: WARREN, Eli, Bend (US); TOMICK, Hunter, Lebanon (US); GOYETTE, Scott, Moosup (US)
(74) Representative: Dehns

(57) **Abstract**

A multi-mode blade tip timing sensor (100; 200) includes a housing (201), a sensing coil (205) provided within the housing (201) and a powered exciter coil (207). The multi-mode blade tip timing sensor (100; 200) can operate in a first, sensing mode, and a second, de-icing mode. When operating in the first, sensing mode, a first current is provided to the powered exciter coil (207) to create a magnetic field such that a movement of one or more moving metallic fan blades (109) through the magnetic field creates a signal in the sensing coil (205). When operating in the second, de-icing mode, a second current is provided to the powered exciter coil (207) to induce an eddy current in a tip of the one or more moving metallic turbine fan blades (109), wherein the eddy current raises a temperature of the one or more moving metallic turbine fan blades (109) above an icing temperature.

## Description

### TECHNICAL FIELD

This disclosure relates generally to prevention of icing on the fan blades of gas turbines. More specifically, this disclosure relates to an eddy current tip timing sensor used for blade-tip deicing.

### BACKGROUND

The formation and accumulation of ice on critical aircraft surfaces (for example, wings and fan blades of turbine engines) is a perennial and serious concern in aviation, for which a host of aircraft and ground-crew based solutions have been proposed and implemented. Formation of ice on the tips of the fan blades of turbofan engines can be particularly problematic, as existing, blower-type fan deicers are most effective on the central portions of fan blades and often exhibit diminished efficacy at the tips of fan blades. Given the importance of ensuring proper deicing of critical airfoils, improving, and optimizing deicing systems remains a source of technical challenges and opportunities for improvement in the art.

### SUMMARY

This disclosure relates to relates to an eddy current tip timing sensor used for blade-tip deicing.

In a first aspect, a multi-mode blade tip timing sensor includes a housing, a sensing coil provided within the housing and a powered exciter coil provided within the housing. The multi-mode blade tip timing sensor can be configured to operate in a first, sensing mode, and a second, de-icing mode. When operating in the first, sensing mode, a first current is provided to the powered exciter coil to create a magnetic field such that a movement of one or more moving metallic turbine fan blades through the magnetic field creates a signal in the sensing coil for determining a time of arrival of the one or more moving metallic turbine fan blades. When operating in the second, de-icing mode, a second current is provided to the powered exciter coil to induce an eddy current in a tip of the one or more moving metallic turbine fan blades, wherein the eddy current raises a temperature of the one or more moving metallic turbine fan blades above an ice formation temperature.

In a second aspect, a method of operating a multi-mode blade tip timing sensor includes switching the multi-mode blade tip timing sensor to a first, sensing mode. The multi-mode blade tip timing sensor includes a housing, a sensing coil provided within the housing and a powered exciter coil provided within the housing and switching the multi-mode blade tip timing sensor to a second, deicing mode. When operating in the first, sensing mode, a first current is provided to the powered exciter coil to create a magnetic field such that a movement of one or more moving metallic turbine fan blades through the magnetic field creates a signal in the sensing coil for determining a time of arrival of the one or more moving metallic turbine fan blades. When operating in the second, deicing mode, a second current is provided to the powered exciter coil to induce an eddy current in a tip of the one or more moving metallic turbine fan blades, wherein the eddy current raises a temperature of the one or more moving metallic turbine fan blades above an ice formation temperature.

A non-transitory machine-readable medium includes instructions, which when executed by a processor, cause a multi-mode blade tip timing sensor to switch the multi-mode blade tip timing sensor to a first, sensing mode. The multi-mode blade tip timing sensor includes a housing, a sensing coil provided within the housing and a powered exciter coil provided within the housing. The instructions, when executed, further cause the multi-mode blade tip timing sensor to switch the multi-mode blade tip timing sensor to a second, deicing mode. When operating in the first, sensing mode, a first current is provided to the powered exciter coil to create a magnetic field such that a movement of one or more moving metallic turbine fan blades through the magnetic field creates a signal in the sensing coil for determining a time of arrival of the one or more moving metallic turbine fan blades. When operating in the second, deicing mode, a second current is provided to the powered exciter coil to induce an eddy current in a tip of the one or more moving metallic turbine fan blades, wherein the eddy current raises a temperature of the one or more moving metallic turbine fan blades above an ice formation temperature.

Any single one or any combination of the following features may be used with the aspects above. The second current can be ten or more times greater than the first current.

The housing can be proportioned to match a form factor of an existing sensor-only blade tip timing sensor. The multi-mode blade tip timing sensor can be configured to operate in a third, ground mode. When operating in the third, ground mode, at least one of the following occurs: a third current is intermittently provided to the powered exciter coil to provide a torque in a direction of rotation of the one or more moving metallic turbine fan blades or the one or more moving metallic turbine fan blades are rotated by a force provided by an engine gearbox or an auxiliary source. The multi-mode blade tip timing sensor can further include a temperature sensor measuring a current air temperature around tips of the one or more moving metallic turbine fan blades. The temperature sensor can be configured to output a current air temperature measurement to an engine controller and the multi-mode blade tip timing sensor can be configured to switch between the first, sensing mode and the second, de-icing mode in response to control inputs generated by the engine controller based on the current air temperature measurement. The multi-mode blade tip timing sensor can further include a controller disposed in the housing. The controller can be configured to switch the multi-mode blade tip timing sensor between the first, sensing mode and the second, de-icing mode in response to control inputs generated by the controller based on a current air temperature measurement.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1 illustrates an example of an engine nacelle configured to house a multi-mode blade tip timing sensor according to this disclosure;
FIGURE 2 illustrates an example of a multi-mode blade tip timing sensor according to this disclosure; and
FIGURE 3 illustrates an example method for operating a multi-mode blade tip timing sensor according to embodiments of this disclosure.

### DETAILED DESCRIPTION

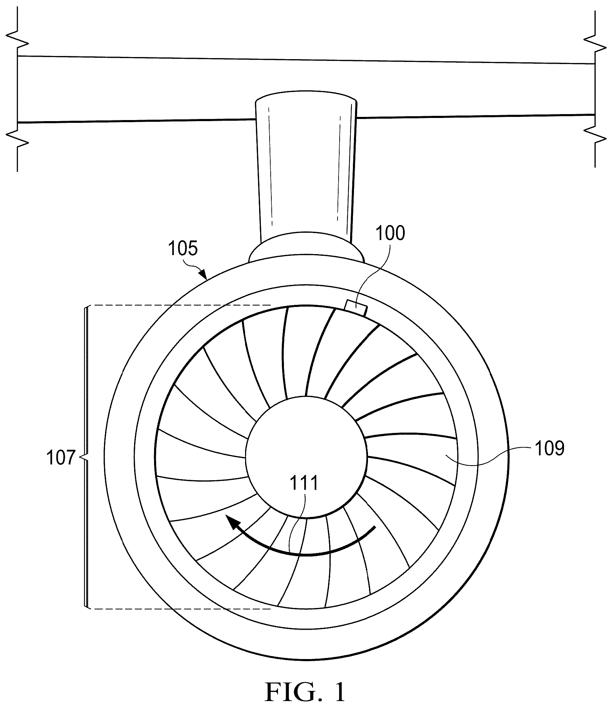

FIGURES 1 through 3, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, ensuring proper de-icing of critical airfoils (for example, wings, control surfaces, and fan blades of turbofan engines) is a perennial problem in the field of aircraft design. Existing solutions for inhibiting the formation of layers of ice on fans, such as blower-based solutions, have proven most effective at inhibiting ice at the slower-moving portions of fan blades disposed near a central axis of rotation for the rotating machinery (i.e., the fan, compressor, and spools) of the turbofan. However, such solutions have not proven as effective at inhibiting ice at the faster-moving tips of the fan blades, where ice accumulation can cause unwanted imbalances and parasitic oscillations in the fan assembly, which can require powering down the affected engine.

Skilled artisans will appreciate that, aircraft and aircraft engines are extremely interconnected systems, and existing designs typically represent significant efforts in trying to minimize the size, weight, and power ("SWaP") of each component of system. Unlike ground-based hardware systems, simply adding a bigger, heavier, or more powerful version of an underperforming component is typically not a viable solution. Rather, realistic solutions to problems in existing airframes generally need to be reverse-compatible with existing control systems, and, at the same time, not impose SWaP penalties.

Embodiments according to the present disclosure improve turbofan blade de-icing without imposing significant SWaP or compatibility issues by providing a multi-mode blade tip timing sensor, which can replace existing single-mode blade tip timing sensors that generate an electrical signal in a coil induced by the passage of a metallic fan blade tip through a magnetic field provided by the sensor for performing timing measurements of the fan blade tip, with a multi-mode apparatus, which, in addition to obtaining the signals for timing measurements, can also operate in a de-icing mode, wherein a significantly stronger magnetic field than used for performing timing measurements is created. Movement of the metallic fan blade tip through the magnetic field creates localized changes in magnetic flux density within the metal of the fan creates eddy currents in the portion of the metallic fan tip near the multi-mode blade tip timing sensor. The passage of eddy current through the metal of the fan tip creates heat, which can raise the temperature of the tip of the fan blade above the temperature (i.e., 32 degrees Fahrenheit) at which ice begins to form on the fan tip. Further in some embodiments, multi-mode sensor can operate in a ground mode, wherein the force of the magnetic field provided by the sensor is modulated to both create a torque to keep the fan spinning and to also produce warming eddy currents in the fan blades. In this way, embodiments according to this disclosure can inhibit formation of ice in fan blade tips even when the turbofan is off or in a low-power state.

FIGURE 1 illustrates a head-on view of a multi-mode current tip timing sensor 100 according to embodiments of this disclosure as installed in an engine nacelle. Referring to the illustrative example of FIG. 1, an engine nacelle 105 is shown in the figure. Engine nacelle 105 houses a turbofan engine 107, wherein a first stage of turbofan engine 107 is a forward-facing (relative to the direction of flight) fan comprising a plurality of metallic fan blades, including metallic fan blade 109. The fan blades are configured to rotate in a preferred direction of rotation 111, which draws air into turbofan engine 107. One or more current tip timing sensors 100 are disposed at locations within the nacelle proximate to the tips of the metallic fan blades, including metallic fan blade 109. As the tip of each metallic fan blade passes by the one or more current tip timing sensors, it creates an electrical signal at current tip timing sensor 100. From this electrical signal, one or more metrics of operational interest, such as a time of arrival for each fan blade can be determined. Using time of arrival data, error conditions, such as imbalances, broken fan blades, and unwanted oscillations within the fan blades can be determined.

As skilled artisans will appreciate, the space within engine nacelle 105 is extremely limited and offers few, if any spatial options for additional or enlarged componentry. Accordingly, multi-mode (i.e., timing detection mode, and de-icing mode) current tip timing sensor 100 is proportioned to have an equivalent form factor as a legacy single-mode current tip timing sensor. Additionally, and as discussed herein, multi-mode current tip timing sensor 100 can include one or more controllers to facilitate compatibility with engine controllers (for example, electronic engine controls ("EECs") or full authority digital engine controls ("FADECs")). It should further be noted that FIG. 1 is intended to be illustrative of the location of multi-mode current tip timing sensor, and that the relative scale of multi-mode current tip timing sensor 100 relative to engine nacelle 105 can, in some embodiments, be different than shown in the figure - for example, multi-mode current tip timing sensor 100 may be much smaller than engine nacelle 105.

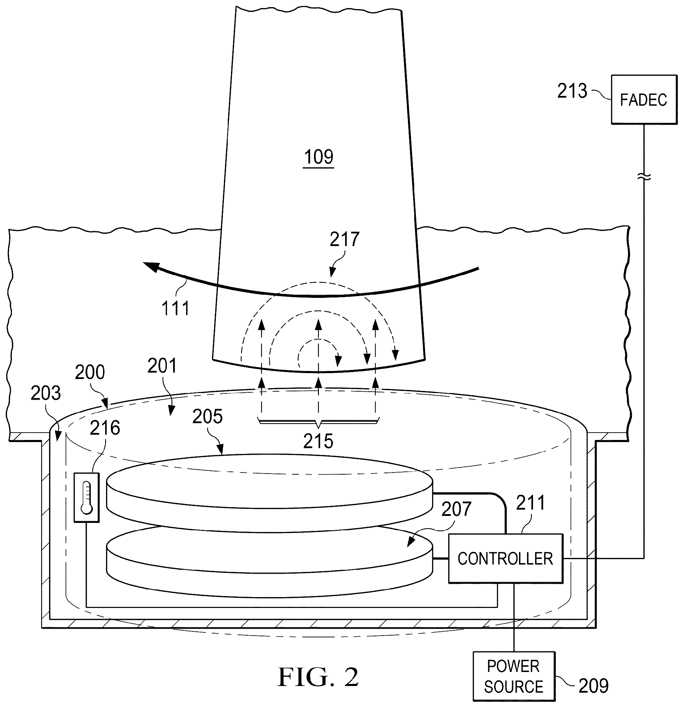

FIGURE 2 illustrates an example of a multi-mode current tip timing sensor 200 according to embodiments of this disclosure. For consistency, and convenience of cross-reference, elements in FIG. 2 already described with reference to FIG 1 are numbered similarly.

Referring to the illustrative example of FIG. 2, multi-mode current tip timing sensor 200 comprises a housing 201, which can be a substantially sealed, weatherproof container of a material which does not substantially interfere with the passage of magnetic flux into and out of the container. Housing 201 has a form factor suitable for fitting within a space 203 previously occupied by a legacy, single-mode current tip timing sensor. Because embodiments according to this disclosure can be of substantially equivalent size and shape to existing single mode current tip timing sensors, retrofitting sensors according to this disclosure imposes minimal SWaP penalties, if any. Referring to the illustrative example of FIG. 2, multi-mode current tip timing sensor 200 comprises one or more sensing coils 205 provided within housing 201. Additionally, multi-mode current tip timing sensor 200 comprises one or more powered exciter coils 207. In certain embodiments, one or more powered exciter coils 207 and one or more sensing coils 205 are stacked and occupy a common footprint. The one or more powered exciter coils 207 are connected to one or more power sources 209 which can provide a variable supply of electrical power to one or more powered exciter coils ranging in power from 10W to 100W in some embodiments.

In some embodiments, the ends of the windings of one or more sensing coils 205 are connected to a controller 211 contained within housing 201. In some embodiments controller 211 operates to amplify and digitize inductive electrical signals created in one or more sensing coils 205 by the passage of metallic fan blade tips (for example, the tip of fan blade 109) passing by multi-mode current tip timing sensor 200. As discussed herein, controller 211 can, in some embodiments, include a processor or application specific control logic chip (for example, and application specific integrated circuit ("ASIC")) for implementing control logic for switching between modes of operation. As shown in the figure, one or more powered exciter coils 207 can be driven by one or more power sources. Additionally, one or more sensing coils 205 can be connected directly, or indirectly (for example, via controller 211) to one or more engine control systems (for example, FADEC 213). In some embodiments, multi-mode current tip timing sensor 200 comprises a temperature sensor 216 (for example, a thermocouple) for measuring an air temperature around the fan blade tips. Temperature sensor 216 can be connected to controller 211, and may further be connected, either directly or indirectly to FADEC 213.

In this example, multi-mode current tip timing sensor 200 can operate in at least the following three modes: (1) a sensing-only mode; (2) a deicing mode; and (3) a ground mode.

When operating in a first, sensing mode, a first lower-powered current is provided by power source 209 and passed through one or more powered exciter coils 207 to create a magnetic field 215. As metallic fan blade 109 moves in direction of rotation 111 past multi-mode current tip timing sensor 200, the magnetic flux through one or more sensing coils changes, inducing an electrical signal recorded by one or more of controller 211 and FADEC 213. From this electrical signal, the time of arrival of metallic fan blade 109 at multi-mode current tip timing sensor 200 can be calculated and used as data for diagnosing unwanted oscillation in the fan assembly or the presence of broken or damaged fan blades.

When operating in a second, de-icing mode, a second, higher-powered current is provided by power source 209 and passed through one or more powered exciter coils 207 to create magnetic field 215. According to some embodiments, this second, higher-powered current is on the order of ten times greater than the first, lower-powered current. Thus, if one or more powered exciter coils 207 draw 7.5 Watts in the first, sensing mode, a current on the order of 75-100 Watts can be provided to the one or more powered exciter coils 207 in the second, deicing mode. When fan blade 109 passes through magnetic field 215 in the second, deicing mode, local variations in magnetic flus in the metal of fan blade 109 create localized eddy currents 217, and the internal passage of electrical current through the resistive metallic medium of fan blade 109 creates heat, causing the temperature of the tip of fan blade 109 to rise. In this way, the formation of ice on the surface of the tip of fan blade 109 can be inhibited.

In some embodiments, because magnetic field 215 is significantly more powerful when multi-mode current tip timing sensor 200 is operating in deicing mode, the changes in magnetic flux through the one or more sensing coils 205 may be significantly greater than in sensing mode, resulting in saturated signals from which it is difficult to accurately determine the time of arrival of fan blade 109. Accordingly, one or more of controller 211 or FADEC 213 may switch multi-mode current tip timing sensor 200 between its sensing and deicing modes to ensure that FADEC 213 continues to receive some blade tip timing data, and at the same time, deicing of blade tips can be performed. According to some embodiments, the control logic for switching between sensing and deicing modes can be based on temperature data obtained by temperature sensor 216 and provided to one or more of controller 211 or FADEC 213.

Additionally, in some embodiments, multi-mode current tip timing sensor 200 can be configured to operate in a third, "ground" mode for situations (i.e., when the aircraft is parked) in which the engine is off or at sufficiently low power level that the fan may not be turning, and fan blade 109 may not be pushed through magnetic field 215 under the power of the turbofan. Accordingly, in addition to being used to induce warming eddy currents 217 at the tip of fan blade 109, the current provided to one or more powered exciter coils 207 is modulated to create variations in an inductive force provided by one or more powered exciter coils 207 to fan blade 109 (provided fan blade 109 is formed of stainless steel or another suitable ferrous material) and the other metallic fan blades of the fan assembly. When operating in the third, "ground" mode, multi-mode current tip timing sensor 200 effectively functions as the stator of a large, slow-moving alternating current (AC) induction motor, wherein the fan becomes the rotor. While the torque generated by multi-mode current tip timing sensor is small compared to the torque and driving speeds provided by fan spool when the engine is at full power, the torque can be sufficient to keep the fan blades passing by multi-mode current tip timing sensor 200 for deicing.

Alternatively, in embodiments in which fan blade 109 is metallic, but not formed of a ferrous material, the force to provide a slow rotation of the fan for deicing can, instead, be provided by one or more of a gearbox of the engine, or an auxiliary power source which causes the fan to rotate.

Skilled artisans will appreciate that FIG. 2 is illustrative of, rather than limitative of, embodiments according to this disclosure. Skilled artisans will further appreciate that, in some embodiments, the relative scales of fan blade 109 and multi-mode current tip timing sensor 200 may differ from what is shown in the figure.

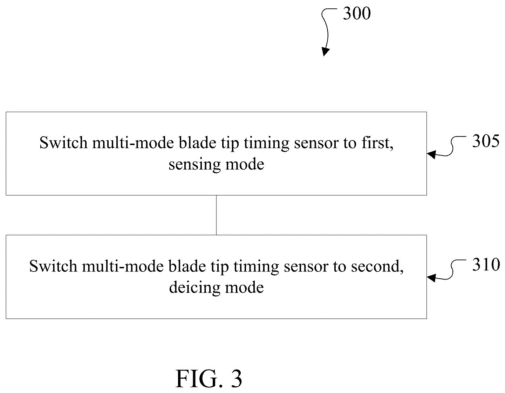

FIGURE 3 illustrates operations of an example method 300 for implementing multi-mode tip timing measurement and deicing according to certain embodiments of this disclosure.

Referring to the illustrative example of FIG. 3, at operation 305, a multi-mode blade tip timing sensor (for example, multi-mode current tip timing sensor 200 in FIG. 2) is switched to a first, sensing mode, wherein a first current is provided to a powered exciter coil (for example, one or more powered exciter coils 207 in FIG. 2) to create a magnetic field. As a metallic turbine fan blade (for example, fan blade 109) passes through the magnetic field, it induces an electrical signal in a sensing coil (for example, one or more sensing coils 205 in FIG. 2) which can be used for determining a time of arrival of the metallic turbine fan blade moving through the magnetic field. Consistent with macro-level design trends within the aviation industry away from centralized control of some aircraft systems towards distributed control, the command to control the multi-mode blade tip timing sensor can be implemented by either a central engine controller (for example, FADEC 213 in FIG. 2) or locally, by a controller resident in the multi-mode blade tip timing sensor (for example, controller 211 in FIG. 2).

At operation 310, the multi-mode blade tip timing sensor is switched from the first, sensing mode to a second, deicing mode, wherein, when operating in the second, deicing mode, a second current is provided to the powered exciter coil to induce an eddy current in a tip of the one or more moving metallic turbine fan blades, wherein the second eddy current raises a temperature of the one or more moving metallic turbine fan blades above an ice formation temperature. In some embodiments, the switch between the first, sensing mode and the second, deicing mode can be performed based on logic implemented in response to one or more sensors on the aircraft, including, without limitation, detection of vibrations by an engine control system, detection of an electrostatic charge by an inlet debris monitoring system, a temperature sensor. Additionally, or alternatively, switching between the first, sensing mode and the second, deicing mode can be performed based on the application of control logic to one or more items of data regarding the location or state of the aircraft, including, without limitation, the current location of the aircraft (for example, GPS data indicating operation in a cold climate), data indicating the interval between shutdown and startup (i.e., data indicating the amount of time the engine was in a cold, static state), and information on the usage or age of the engine.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component" , "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A multi-mode blade tip timing sensor comprising:
a housing;
a sensing coil provided within the housing; and
a powered exciter coil provided within the housing;
wherein the multi-mode blade tip timing sensor is configured to operate in a first, sensing mode, and a second, de-icing mode;
wherein, when operating in the first, sensing mode, a first current is provided to the powered exciter coil to create a magnetic field such that a movement of one or more moving metallic turbine fan blades through the magnetic field creates a signal in the sensing coil for determining a time of arrival of the one or more moving metallic turbine fan blades; and
wherein, when operating in the second, de-icing mode, a second current is provided to the powered exciter coil to induce an eddy current in a tip of the one or more moving metallic turbine fan blades, wherein the eddy current raises a temperature of the one or more moving metallic turbine fan blades above an ice formation temperature.

2. The multi-mode blade tip timing sensor of claim 1, wherein the second current is ten or more times greater than the first current.

3. The multi-mode blade tip timing sensor of claim 1 or claim 2, wherein the housing is proportioned to match a form factor of an existing sensor-only blade tip timing sensor.

4. The multi-mode blade tip timing sensor of claim 1, 2 or 3, wherein the multi-mode blade tip timing sensor is configured to operate in a third, ground mode; and
wherein, when operating in the third, ground mode, at least one of: a third current is intermittently provided to the powered exciter coil to provide a torque in a direction of rotation of the one or more moving metallic turbine fan blades, or the one or more moving metallic turbine fan blades are rotated by a force provided by an engine gearbox or an auxiliary source.

5. The multi-mode blade tip timing sensor of any preceding claim, further comprising:
a temperature sensor measuring a current air temperature around tips of the one or more moving metallic turbine fan blades.

6. The multi-mode blade tip timing sensor of claim 5, wherein the temperature sensor is configured to output a current air temperature measurement to an engine controller; and
wherein the multi-mode blade tip timing sensor is configured to switch between the first, sensing mode and the second, de-icing mode in response to control inputs generated by the engine controller based on the current air temperature measurement.

7. The multi-mode blade tip timing sensor of claim 5, further comprising:
a controller disposed in the housing,
wherein the controller is configured to switch the multi-mode blade tip timing sensor between the first, sensing mode and the second, de-icing mode in response to control inputs generated by the controller based on a current air temperature measurement.

8. A method of operating a multi-mode blade tip timing sensor, the method comprising:
switching the multi-mode blade tip timing sensor to a first, sensing mode, wherein the multi-mode blade tip timing sensor comprises:
a housing;
a sensing coil provided within the housing; and
a powered exciter coil provided within the housing; and
switching the multi-mode blade tip timing sensor to a second, deicing mode;
wherein, when operating in the first, sensing mode, a first current is provided to the powered exciter coil to create a magnetic field such that a movement of one or more moving metallic turbine fan blades through the magnetic field creates a signal in the sensing coil for determining a time of arrival of the one or more moving metallic turbine fan blades; and
wherein, when operating in the second, deicing mode, a second current is provided to the powered exciter coil to induce an eddy current in a tip of the one or more moving metallic turbine fan blades, wherein the eddy current raises a temperature of the one or more moving metallic turbine fan blades above an ice formation temperature.

9. The method of claim 8, wherein the second current is ten or more times greater than the first current; and/or
wherein the housing is proportioned to match a form factor of an existing sensor-only blade tip timing sensor; and/or
wherein the method further comprises switching the multi-mode blade tip timing sensor to operate in a third, ground mode,
wherein, when operating in the third, ground mode, at least one of: a third current is intermittently provided to the powered exciter coil to provide a torque in a direction of rotation of the one or more moving metallic turbine fan blades, or the one or more moving metallic turbine fan blades are rotated by a force provided by an engine gearbox or an auxiliary source.

10. The method of claim 8 or claim 9, further comprising:
a temperature sensor measuring a current air temperature around tips of the one or more moving metallic turbine fan blades.

11. The method of claim 10, further comprising:
outputting, from the temperature sensor, a current air temperature measurement to an engine controller; and
switching between the first, sensing mode and the second, deicing mode in response to control inputs generated by the engine controller based on the current air temperature measurement.

12. The method of claim 10, further comprising:
outputting, from the temperature sensor, a current air temperature measurement to a controller disposed in the housing; and
switching the multi-mode blade tip timing sensor between the first, sensing mode and the second, deicing mode in response to control inputs generated by the controller disposed in the housing based on the current air temperature measurement.

13. A non-transitory machine-readable medium comprising instructions, which when executed by a processor, cause a multi-mode blade tip timing sensor to:
switch the multi-mode blade tip timing sensor to a first, sensing mode, wherein the multi-mode blade tip timing sensor comprises:
a housing;
a sensing coil provided within the housing; and
a powered exciter coil provided within the housing; and
switch the multi-mode blade tip timing sensor to a second, deicing mode;
wherein, when operating in the first, sensing mode, a first current is provided to the powered exciter coil to create a magnetic field such that a movement of one or more moving metallic turbine fan blades through the magnetic field creates a signal in the sensing coil for determining a time of arrival of the one or more moving metallic turbine fan blades; and
wherein, when operating in the second, deicing mode, a second current is provided to the powered exciter coil to induce an eddy current in a tip of the one or more moving metallic turbine fan blades, wherein the eddy current raises a temperature of the one or more moving metallic turbine fan blades above an ice formation temperature.

14. The non-transitory machine-readable medium of claim 13, wherein the second current is ten or more times greater than the first current; and/or
wherein the housing is proportioned to match a form factor of an existing sensor-only blade tip timing sensor; and/or
wherein the non-transitory machine-readable medium, further comprises instructions, which, when executed by the processor, cause the multi-mode blade tip timing sensor to switch to operating in a third, ground mode,
wherein, when operating in the third, ground mode, at least one of: a third current is intermittently provided to the powered exciter coil to provide a torque in a direction of rotation of the one or more moving metallic turbine fan blades, or the one or more moving metallic turbine fan blades are rotated by a force provided by an engine gearbox or an auxiliary source.

15. The non-transitory machine-readable medium of claim 13 or 14, wherein the multi-mode blade tip timing sensor comprises a temperature sensor measuring a current air temperature around tips of the one or more moving metallic turbine fan blades, and wherein, optionally, the non-transitory machine-readable medium further comprises instructions, which when executed by the processor, cause the multi-mode blade tip timing sensor to:
output, from the temperature sensor, a current air temperature measurement to a controller disposed in the housing, wherein the controller comprises the processor; and
switch between the first, sensing mode and the second, deicing mode in response to control inputs generated by the controller based on the current air temperature measurement.
